# EUROPEAN PATENT SPECIFICATION

(11) **EP 4 369 454 B1**
(45) Date of publication and mention of the grant of the patent: **08.04.2026**
(21) Application number: 22876160.7
(22) Date of filing: 27.09.2022
(51) Int. Cl.: H01M 10/0562, H01M 6/18, H01M 10/0585, H01M 50/417, H01M 50/42, H01M 50/423, H01M 50/429, H01M 50/434, H01M 50/44, H01M 50/46, H01M 50/489, H01M 10/0525

(54) **ALL-SOLID-STATE BATTERY**
FESTKÖRPERBATTERIE
BATTERIE ENTIÈREMENT À ÉLECTROLYTE SOLIDE

(30) Priority: 30.09.2021 JP 2021160518
(43) Date of publication of application: 15.05.2024
(60) Divisional application: 26162257.5
(73) Proprietor: Maxell, Ltd., Kyoto 618-8525 (JP)
(72) Inventor: SEKIYA, Tomohito, Otokuni-gun, Kyoto 618-8525 (JP); KATAYAMA, Hideaki, Otokuni-gun, Kyoto 618-8525 (JP); KAMIZORI, Haruki, Otokuni-gun, Kyoto 618-8525 (JP)
(74) Representative: Diehl & Partner
(86) International application number: PCT/JP2022/035804
(87) International publication number: WO 2023/054293

(56) References cited:
- EP-A1- 3 843 194
- CN-A- 108 598 563
- CN-A- 109 494 390
- JP-A- 2014 096 311
- JP-A- 2014 096 311
- JP-A- 2016 031 789
- KR-A- 20160 013 631
- KR-A- 20200 078 181
- KR-A- 20200 111 638
- US-A1- 2018 026 302
- US-A1- 2021 175 539

## Description

### Technical Field

The present invention relates to an all-solid-state battery with high productivity.

### Background Art

In recent years, the development of portable electronic devices such as cellular phones and laptop personal computers, the practical use of electric vehicles, and the like have led to the need for compact and lightweight batteries that have a high capacity and a high energy density.

Currently, in lithium batteries that can meet this demand, especially lithium-ion batteries, an organic electrolyte solution containing an organic solvent and a lithium salt as nonaqueous electrolytes is used.

Following further development of devices that use lithium-ion batteries, there is a demand for lithium-ion batteries having an increased life-span, a higher capacity, and a higher energy density, and a high degree of reliability is also required for the lithium-ion batteries having an increased life-span, a higher capacity, and a higher energy density.

However, since an organic electrolyte solution used in a lithium-ion battery contains a flammable organic solvent, the organic electrolyte solution may abnormally generate heat when an abnormal situation such as a short circuit occurs in the battery. In recent years, as the energy density of lithium-ion batteries and the amount of organic solvent in the organic electrolyte solution have increased, there is growing need for reliability in lithium-ion batteries.

Under these circumstances, all-solid-state lithium batteries (all-solid-state batteries) not using organic solvents have been gaining attention. An all-solid-state battery includes, instead of conventional organic solvent-based electrolytes, a molded body made of a solid electrolyte in which no organic solvents are used, and is very safe because there is no risk of the solid electrolyte abnormally generating heat.

Also, all-solid-state batteries are very safe as well as being highly reliable and highly environmentally resistant, and have an increased life-span. Therefore, it is anticipated that all-solid-state batteries will become maintenance-free batteries that can continue to contribute to the development of society, as well as to safety and security. Providing all-solid-state batteries to society will contribute to reaching the following goals of the 17 Sustainable Development Goals (SDGs) established by the United Nations: Goal 3 (to ensure healthy lives and promote well-being for all people of all ages), Goal 7 (to ensure access for all people to affordable, reliable, sustainable and modern energy), Goal 11 (to achieve inclusive, safe, resilient and sustainable cities and human settlements), and Goal 12 (to ensure sustainable production and consumption patterns).

Further, various studies have been carried out on all-solid-state batteries as well. For example, Patent Documents 1 to 4 propose that a solid electrolyte sheet having both lithium ion conductivity and strength is obtained by filling pores of a base member made of a porous substrate such as a nonwoven fabric with a solid electrolyte, and that an all-solid-state secondary battery is formed using this solid electrolyte sheet.

In particular, Patent Document 4 discloses that the mechanical strength of a solid electrolyte sheet can be increased by setting the thickness of the porous substrate to 70% or more of the thickness of the entire solid electrolyte sheet, and even when the area of the solid electrolyte sheet is increased, it is possible to prevent damage to the solid electrolyte and the solid electrolyte from falling from the porous substrate.

### Prior Art Documents

### Patent Document

Patent Document 1: JP 2015-153460A
Patent Document 2: JP 2016-139482A
Patent Document 3: WO 2019/208347
Patent Document 4: WO 2020/054081

EP3843194 A1 discloses an all-solid-state battery according to the preamble of the appended claim 1.

### Disclosure of Invention

### Problem to be Solved by the Invention

According to the technique disclosed in Patent Document 4, studies conducted by the inventors of the present invention revealed that it is possible to provide an all-solid-state battery with excellent discharging properties, but when a large number of batteries are produced, some of the batteries may have poor charging properties. Therefore, there is still room for improvement in this respect in the technique disclosed in Patent Document 4.

The present invention was made in view of the above-described circumstances, and aims to provide an all-solid-state battery with high productivity.

### Means for Solving Problem

An all-solid-state battery according to the present invention includes a stacked body provided with a positive electrode, a negative electrode, and a solid electrolyte sheet interposed between the positive electrode and the negative electrode, in which the solid electrolyte sheet contains a porous substrate and a solid electrolyte, the solid electrolyte is retained in pores of the porous substrate, both surfaces of the porous substrate are covered with the solid electrolyte, and in the solid electrolyte sheet, the porous substrate is located biased toward the positive electrode in a thickness direction of the solid electrolyte sheet, and the solid electrolyte sheet has a thickness of 50 µm or less.

### Effects of the Invention

The present invention can provide an all-solid-state battery with high productivity.

### Brief Description of Drawings

[FIG. 1] FIG. 1 is a cross-sectional view schematically showing a portion of an example of a stacked body having a positive electrode, a negative electrode, and a solid electrolyte sheet according to an all-solid-state battery of the present invention.
[FIG. 2] FIG. 2 is a partially enlarged diagram of FIG. 1.
[FIG. 3] FIG. 3 is a plan view schematically showing an example of an all-solid-state battery of the present invention.
[FIG. 4] FIG. 4 is a cross-sectional view taken along line I-I of FIG. 3.

### Description of the Invention

In a solid electrolyte sheet in which the solid electrolyte is retained in pores of a porous substrate, when the porous substrate is exposed to the surface of the sheet, the porous substrate obstructs the movement of ions at the interface between a positive electrode and the solid electrolyte sheet and the interface between the negative electrode and the solid electrolyte sheet, and thus charge and discharge reactions at the positive electrode and the negative electrode are likely to be non-uniform. Thus, it is desirable that the solid electrolyte sheet is configured such that both surfaces of the porous substrate are covered by the solid electrolyte at a certain thickness or more so that constituent materials of the porous substrate are not exposed to the surface of the solid electrolyte sheet.

The effect of the porous substrate of the solid electrolyte sheet obstructing the movement of ions is greater at the negative electrode than at the positive electrode, making it more likely that issues such as metal deposition will arise during charging of the battery, leading to charging abnormalities of the battery.

For this reason, in a solid electrolyte sheet that includes a porous substrate, it is desirable that the solid electrolyte is retained in pores of the porous substrate, and both surfaces of the porous substrate are covered with the solid electrolyte.

Meanwhile, it is desirable to reduce the thickness of the solid electrolyte sheet in order to reduce the internal resistance of the all-solid-state battery. However, when attempts are made to make the solid electrolyte sheet in which both surfaces of the porous substrate are covered with the solid electrolyte thinner, it becomes difficult to position the porous substrate in the center of the solid electrolyte sheet in the thickness direction of the solid electrolyte sheet. Thus, a solid electrolyte sheet in which the porous substrate is located biased toward one side in the thickness direction is likely to be formed. Therefore, there will be a difference in the thickness of the solid electrolyte covering the porous substrate on both surfaces of the porous substrate.

Furthermore, depending on the production method, when attempts are made to reduce the thickness of a solid electrolyte sheet, it may not be possible to make the thickness of the entire sheet uniform, resulting in uneven thickness of the solid electrolyte covering the surface of the porous substrate.

As a result, a portion, where a constituent material of the porous substrate is present near the surface of the solid electrolyte sheet, will be formed on the side where the porous substrate has unevenly moved (the side where the porous substrate is close to a surface).

Also, it was found that the above-mentioned charging abnormality issue is likely to arise in an all-solid-state battery constructed by disposing a solid electrolyte sheet such that a surface on the side where the porous substrate has unevenly moved faces the negative electrode in this manner, and when many batteries are produced, the number of such batteries increases, that is, there is a risk that battery productivity will decrease.

In view of this, in the all-solid-state battery according to the present invention, the solid electrolyte sheet, which contains the porous substrate and the solid electrolyte, and in which the solid electrolyte is retained in the pores of the porous substrate and both surfaces of the porous substrate are covered with the solid electrolyte, has a configuration in which a surface on the side where the porous substrate is biased toward is disposed on the positive electrode side in a case where the porous substrate is located biased toward one surface (i.e., in the present invention, a configuration is not included in which the porous substrate is disposed such that a center portion in the thickness direction of the solid electrolyte sheet matches a center portion of the porous substrate in the solid electrolyte sheet). As a result, it is possible to suppress the occurrence of charging abnormalities described above, and thus it is possible to suppress the number of issues arising when many all-solid-state batteries are produced, and increase the productivity.

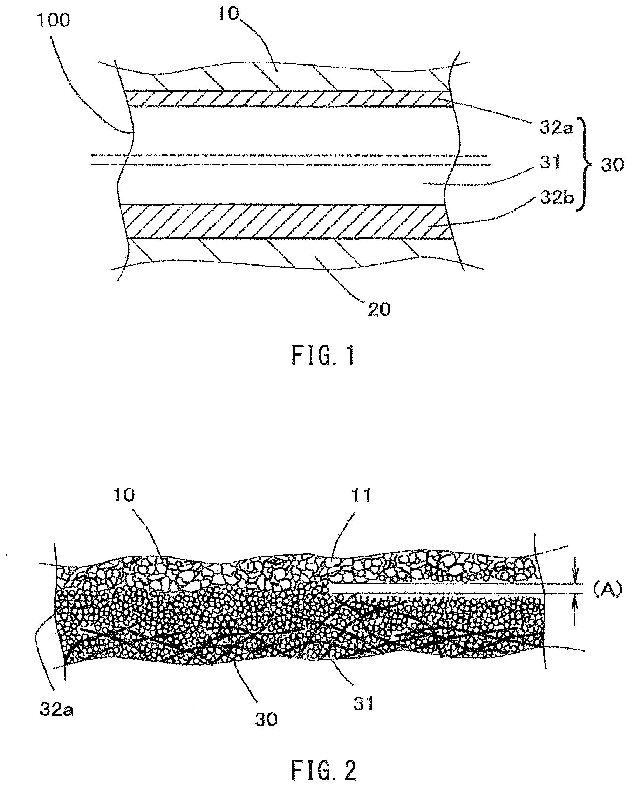

FIG. 1 shows a cross-sectional view schematically showing a portion of an example of a stacked body having a positive electrode, a negative electrode, and a solid electrolyte sheet according to an all-solid-state battery of the present invention. FIG. 1 shows a region that includes a solid electrolyte sheet 30, and a positive electrode 10 and a negative electrode 20 that are respectively disposed on/below the solid electrolyte sheet 30 in the stacked body 100 (i.e., FIG. 1 is a diagram showing a portion of a cross-section extending in a direction parallel to a stacking direction of the stacked body 100 in which the positive electrode 10, the solid electrolyte sheet 30, and the negative electrode 20 are stacked on each other). Note that, to facilitate understanding of a description of the arrangement of constituent elements, diagonal lines indicating a cross-section of the porous substrate 31 are not shown in FIG. 1.

The solid electrolyte sheet 30 includes a porous substrate 31 and solid electrolytes 32a and 32b covering both surfaces of the porous substrate 31. Also, a solid electrolyte is retained in pores of the porous substrate 31.

Also, the dotted line in FIG. 1 indicates the center portion in the thickness direction of the porous substrate 31, and the dash-dotted line indicates the center portion in the thickness direction of the solid electrolyte sheet 30, and these two center portions do not overlap each other. The center portion in the thickness direction of the porous substrate 31 does not overlap the center portion in the thickness direction of the solid electrolyte sheet 30, and is located biased toward the positive electrode 10. That is, in the solid electrolyte sheet 30, the thickness of the solid electrolyte 32a covering one side of the porous substrate 31 differs from the thickness of the solid electrolyte 32b covering the other side thereof. Also, the solid electrolyte sheet 30 is disposed such that the thinner solid electrolyte 32a faces the positive electrode 10.

The all-solid-state battery according to the present invention includes a primary battery and a secondary battery.

### Solid electrolyte sheet

The solid electrolyte sheet contains a porous substrate and a solid electrolyte, the solid electrolyte is retained in pores of the porous substrate, and both surfaces of the porous substrate are covered with the solid electrolyte.

There is no particular limitation on the solid electrolyte in the solid electrolyte sheet as long as the solid electrolyte has lithium-ion conductivity, and for example, sulfide-based solid electrolytes, hydride-based solid electrolytes, halide-based solid electrolytes, oxide-based solid electrolytes, and the like can be used.

Examples of the sulfide-based solid electrolytes include particles of Li₂S-P₂S₅-based glass, Li₂S-SiS₂-based glass, Li₂S-P₂S₅-GeS₂-based glass, Li₂S-B₂S₃-based glass, or the like. In addition, it is possible to use thio-LISICON-type sulfide-based solid electrolytes [Li_{12-12a-b+c+6d-e}M¹3_{+a-b-c-d}M²_{b}M³_{c}M⁴_{d}M⁵₁₂₋ₑXₑ (where M¹ represents Si, Ge, or Sn, M² represents P or V, M³ represents Al, Ga, Y, or Sb, M⁴ represents Zn, Ca, or Ba, M⁵ represents S, or S and O, X represents F, Cl, Br, or I, and a, b, c, d, and e satisfy 0≤a<3, 0≤b+c+d≤3, and 0≤e≤3), such as Li₁₀GeP₂S₁₂ and Li_{9.54}Si_{1.74}P_{1.44}S_{11.7}Cl_{0.3}], and argyrodite-type sulfide-based solid electrolytes [Li_{7-f+g}PS₆₋ₓCl_{x+y} (where f and g satisfy 0.05≤f≤0.9, and -3.0f+1.8≤g≤-3.0f+5.7), such as Li₆PS₃Cl, and Li₇₋ₕPS₆₋ₕClᵢBrⱼ (where h, i, and j satisfy h=i+j, 0<h≤1.8, and 0.1≤i/j≤10.0)], which have attracted attention in recent years due to their high lithium-ion conductivity.

Examples of the hydride-based solid electrolytes include LiBH₄, and solid solutions of LiBH₄ and a following alkali metal compound (e.g., solid solutions in which the mole ratio between LiBH₄ and the alkali metal compound is 1:1 to 20:1). At least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amides, rubidium amides, and cesium amides can be used as the alkali metal compound in the above-mentioned solid solution.

Examples of the halide-based solid electrolytes include monoclinic LiAlCl₄, defect spinel or layered LiInBr₄, and monoclinic Li₆₋₃ₘYₘX₆ (where m satisfies 0<m<2 and X=Cl or Br), and it is possible to use known solid electrolytes disclosed in WO 2020/070958 and WO 2020/070955, and the like.

Examples of the oxide-based solid electrolytes include garnet-type Li₇La₃Zr₂O₁₂, NASICON-type Li_{1+O}Al_{1+O}Ti_{2-O}(PO₄)₃ and Li₁₊ₚAl₁₊ₚGe₂₋ₚ(PO₄)₃, and perovskite-type Li_{3q}La_{2/3-q}TiO₃.

The solid electrolytes listed above may be used alone or in combination of two or more. Among these solid electrolytes, sulfide-based solid electrolytes are preferable because sulfide-based solid electrolytes have high lithium-ion conductivity, sulfide-based solid electrolytes containing Li and P are more preferable, and in particular, argyrodite-type sulfide-based solid electrolytes that have high lithium-ion conductivity and high chemical stability are even more preferable.

The solid electrolyte is preferably in the form of particles with an average particle size of preferably 5 µm or less and more preferably 2 µm or less, from the viewpoint of further improving the ability to fill the pores of the porous substrate, and ensuring favorable lithium-ion conductivity. However, if the solid electrolyte particles are too small, there is a risk that handleability will deteriorate. Also, as will be described later, the solid electrolyte particles are preferably bound using a binder in order to retain the particles in the pores of the porous substrate or to make the particles adhere well to the surface of the porous substrate. In such a case, if the solid electrolyte particles are too small, a large amount of binder may be required and the resistance value may increase. Therefore, the average particle diameter of the solid electrolyte particles is preferably 0.3 µm or more, and more preferably 0.5 µm or more.

The average particle diameter of solid electrolyte particles used in this specification and other particles (a positive electrode active material, a negative electrode active material or the like) refers to the value of the 50% diameter (D₅₀) in a volume-based integrated fraction when the integrated volume is calculated based on particles with a small particle size, using a particle size distribution measuring device (Microtrac particle size analyzer "HRA9320" manufactured by Nikkiso Co., Ltd., etc.).

The porous substrate of the solid electrolyte sheet may be made of a fibrous article, such as woven fabric, nonwoven fabric, or mesh, with nonwoven fabric being particularly preferable.

The fiber diameter of a fibrous article that constitutes the porous substrate is preferably 5 µm or less, and preferably 0.5 µm or more.

There is no particular limitation on the material of the fibrous article as long as it does not react with lithium metal and has insulating properties. It is possible to use resins such as polyolefins (e.g., polypropylene and polyethylene); polystyrene; aramid; polyamide-imide; polyimide; nylon; polyesters such as polyethylene terephthalate (PET); polyarylate; cellulose and modified cellulose, and the like. Further, inorganic materials such as glass, alumina, silica, and zirconia may also be used. A preferable material is polyarylate. The fibrous article may be made of one or two or more of the materials listed above. Further, the porous substrate may be constituted by only fibrous articles made of the same material, or may be constituted by fibrous articles made of two or more different materials.

The weight per area of the porous substrate is preferably 10 g/m² or less, and more preferably 8 g/m² or less such that a sufficient amount of solid electrolyte can be retained to ensure favorable lithium-ion conductivity, and is preferably 3 g/m² or more, and more preferably 4 g/m² or more from the viewpoint of ensuring sufficient strength.

It is preferable to bind the solid electrolyte using a binder in order to increase the shape retention of the solid electrolyte sheet by favorably retaining the solid electrolyte in pores of the porous substrate, or improving the adhesion of the solid electrolyte covering the surface of the porous substrate to the porous substrate in the solid electrolyte sheet.

The binder for the solid electrolyte sheet is desirably a binder that does not react with the solid electrolyte, and at least one resin selected from the group consisting of butyl rubber, chloropyrene rubber, acrylic resin, and fluoropolymer is preferably used.

In the solid electrolyte sheet, the porous substrate is located biased toward the one surface in the thickness direction of the solid electrolyte, and the thickness of the solid electrolyte covering one surface of the porous substrate differs from the thickness of the solid electrolyte covering the other surface. Also, the solid electrolyte sheet is disposed such that a thinner solid electrolyte covering the surface of the porous substrate is located on the positive electrode side.

The thickness of the solid electrolyte covering the surface of the porous substrate and facing the positive electrode in the solid electrolyte sheet is desirably a thickness with which a distance (A) between the surface of the porous substrate and the positive electrode active material contained in the positive electrode in the thickness direction of the stacked body is preferably 1 µm or more, and more preferably 3 µm or more. In a case where the solid electrolyte covering the surface of the porous substrate located on the positive electrode side has a thickness with which the distance (A) has an above value, lithium ions between the positive electrode and the solid electrolyte sheet move smoothly during charging and discharging of the all-solid-state battery, thus further improving the effect of suppressing, for example, the occurrence of charging abnormalities.

Furthermore, the thickness of the solid electrolyte covering the surface of the porous substrate and facing the negative electrode in the solid electrolyte sheet is desirably a thickness with which a distance (B) between the surface of the porous substrate and the negative electrode active material contained in the negative electrode in the thickness direction of the stacked body is preferably 3 µm or more, and more preferably 4 µm or more. In a case where the solid electrolyte covering the surface of the porous substrate located on the negative electrode side has a thickness with which the distance (B) has an above value, the effect of suppressing metal deposition during charging of the battery and suppressing the occurrence of charging abnormalities in the battery is further improved.

Note that the thickness of the solid electrolyte sheet is 50 µm or less as described later, and thus the thickness of the solid electrolyte covering the surface of the porous substrate in the solid electrolyte sheet is also limited. Specifically, the thickness of the solid electrolyte covering the surface of the porous substrate and facing the positive electrode in the solid electrolyte sheet is a thickness with which the distance (A) is preferably 15 µm or less, and more preferably 10 µm or less. Furthermore, the thickness of the solid electrolyte covering the surface of the porous substrate and facing the negative electrode in the solid electrolyte sheet is a thickness with which the distance (B) is preferably 15 µm or less, and more preferably 10 µm or less.

Note that, in a case where the thickness of the solid electrolyte covering one surface of the porous substrate in the solid electrolyte sheet significantly differs from the thickness of the solid electrolyte covering the other surface, the difference between the distance (A) and the distance (B) also increases. However, if the difference increases excessively, the solid electrolyte sheet may be likely to curl, for example, and the handleability of the solid electrolyte sheet may deteriorate. Therefore, the difference between the distance (A) and the distance (B) is preferably 10 µm or less.

The thickness of the solid electrolyte sheet is preferably 50 µm or less, more preferably 30 µm or less, and even more preferably 25 µm or less. When the solid electrolyte sheet is thin like this, the solid electrolyte sheet is produced in such a way that the porous substrate is located biased toward one surface in the thickness direction of the solid electrolyte sheet. In this case, out of the solid electrolytes covering the surface of the porous substrate, the thickness of the thinner solid electrolyte is likely to be very small. Therefore, when a battery is constructed with this surface disposed on the negative electrode side, metal deposition is likely to occur during charging of the battery. However, according to the all-solid-state battery of the present invention, it is possible to avoid issues during charging of the battery even when the solid electrolyte sheet is as thin as 50 µm or less.

Also, the thickness of the solid electrolyte sheet is preferably 5 µm or more and more preferably 10 µm or more, from the viewpoint of optimizing the distance between the positive electrode and the negative electrode of a battery in which the solid electrolyte sheet is used, and suppressing the occurrence of short circuiting and an increase in resistance.

When the solid electrolyte covering the surface of the porous substrate has the thickness as described above, the thickness of the porous substrate in the solid electrolyte sheet is preferably 85% or less of the thickness of the solid electrolyte sheet, and more preferably 80% or less thereof, from the viewpoint of ensuring a better effect of suppressing metal deposition that causes charging abnormalities, in addition to smoothing the movement of lithium ions on the positive electrode side and smoothing the movement of lithium ions on the negative electrode side.

Note that the porous substrate functions as a component for improving the shape retention of the solid electrolyte sheet. When the thickness ratio of the porous substrate to the solid electrolyte sheet is too small, the shape retention of the solid electrolyte sheet may deteriorate. Also, when the thickness ratio of the porous substrate to the solid electrolyte sheet is large to a certain extent, in addition to smoothing the movement of lithium ions on the positive electrode side and smoothing the movement of lithium ions on the negative electrode side, the effect of suppressing metal deposition that causes charging abnormalities is more noticeable. Therefore, for these reasons, the thickness of the porous substrate is preferably 30% or more of the thickness of the solid electrolyte sheet, and is more preferably 50% or more thereof.

A specific thickness of the porous substrate is, for example, preferably 3 µm or more, more preferably 8 µm or more, and preferably 45 µm or less, and more preferably 25 µm or less.

In the solid electrolyte sheet, a porous substrate being located biased toward one surface (the positive electrode side of the all-solid-state battery) in the thickness direction of the solid electrolyte sheet means that, when a cross-section, which is obtained by cutting a stacked body in which the positive electrode, the solid electrolyte sheet, and the negative electrode are stacked, perpendicularly to the electrode surface, is observed using a scanning electron microscope (SEM) in five fields of view at a magnification of 500, each field of view is divided into 20 equal sections in the length direction of the solid electrolyte sheet, the smaller of the distance between the positive electrode active material and the porous substrate and the distance between the negative electrode active material and the porous substrate is counted for each section, and the distance with the higher count is used to obtain to which the porous substrate is biased. In a case where there are 15 or more sections out of the twenty sections where no substrate is present, one additional field of view is observed. Also, the fact that the surface of the porous substrate is covered with the solid electrolyte in the solid electrolyte sheet, can be checked by observing the presence of the solid electrolyte above and below the porous substrate in the fields of view, and the fact that the solid electrolyte is retained in pores of the porous substrate is checked by observing the presence of the solid electrolyte in the porous substrate on the fields of view.

FIG. 2 shows an enlarged diagram of a portion of FIG. 1. FIG. 2 shows the vicinity of a stacked surface of the stacked body where the positive electrode 10 and the solid electrolyte sheet 30 are stacked. Note that, in order to keep FIG. 2 from being complicated, no diagonal lines indicating a cross-section are shown in FIG. 2. A surface of the positive electrode 10 that is in contact with the solid electrolyte sheet 30 contains the positive electrode active material 11 and the like (only the positive electrode active material 11 is shown in FIG. 2). Also, on a surface of the solid electrolyte sheet 30 on the positive electrode 10 side, the surface of the porous substrate 31 (fibrous articles constituting the porous substrate 31 are shown in FIG. 2) is covered with the solid electrolyte 32a, and the solid electrolyte is also retained in pores of the porous substrate 31. The distance (A) used in this specification refers to the length between the surface of the porous substrate and the positive electrode active material in the fields of view, the length being obtained at the shortest distance in the thickness direction of the stacked body, that is, the length (A) shown in FIG. 2. Note that, to facilitate understanding of the distance (A), the solid electrolyte is not shown in FIG. 2 between two straight lines for illustrating the length (A) and the vicinities thereof, but the solid electrolyte is actually also present in these parts.

Also, similarly to the distance (A), the distance (B) used in this specification refers to the length between the surface of the porous substrate and the negative electrode active material in the fields of view, the length being obtained at the shortest distance in the thickness direction of the stacked body.

Further, the thickness of the solid electrolyte sheet can be determined using the average of distances between the positive electrode active material and the negative electrode active material measured at five positions, namely, a left end, the center, a right end, an intermediate part between the left end and the center, and an intermediate part between the center and the right end in the length direction of the solid electrolyte sheet in the fields of view. Furthermore, the thickness of the porous substrate can be determined as being the larger out of the largest thickness of the porous substrate and the distance between an upper end of an upper substrate and a lower end of a lower substrate where the porous substrate holds the solid electrolyte in its thickness direction in the fields of view.

The percentage of the porous substrate to the solid electrolyte sheet (the percentage of actual volume excluding the pores) is preferably 30% by volume or less, and more preferably 25% by volume or less, from the viewpoint of ensuring favorable lithium-ion conductivity. Note that, when the percentage of the porous substrate to the solid electrolyte sheet is too small, the effect of improving the shape retention of the solid electrolyte sheet may deteriorate. Therefore, from the viewpoint of further increasing the strength of the solid electrolyte sheet, the percentage of the porous substrate to the solid electrolyte sheet is preferably 5% by volume or more, and more preferably 10% by volume or more.

Also, from the viewpoint of further improving the shape retention of the solid electrolyte sheet, the content of the binder in the solid electrolyte sheet is preferably 0.5% by mass or more and more preferably 1% by mass or more with respect to the total amount of the solid electrolyte and the binder. Also, from the viewpoint of limiting the amount of binder to some extent and suppressing deterioration in lithium-ion conductivity, the content of the binder in the solid electrolyte sheet is preferably 5% by mass or less, and more preferably 3% by mass or less.

Although there is no particular limitation on a method for producing a solid electrolyte sheet, it is preferable to produce a solid electrolyte sheet using a method including a step of forming a slurry or the like by dispersing, in a solvent, the solid electrolyte and a binder used as needed, and forming a slurry coating film on the surface of the porous substrate while filling pores of the porous substrate with the slurry in a wet process. This increases the strength of the solid electrolyte sheet, and facilitates the production of solid electrolyte sheets having a large area.

A coating method such as a screen printing method, a doctor blade method, or an immersion method can be adopted as a method for forming the slurry coating film on the surface of the porous substrate while filling the pores of the porous substrate with a slurry containing a solid electrolyte.

The slurry is prepared by introducing the solid electrolyte, and a binder as needed, into a solvent, and mixing the resulting mixture. It is preferable to select a slurry solvent that is less likely to deteriorate a solid electrolyte. In particular, the sulfide-based solid electrolytes and the hydride-based solid electrolytes cause chemical reactions with a minute amount of water, and therefore, it is preferable to use non-polar aprotic solvents such as hydrocarbon solvents including hexane, heptane, octane, nonane, decane, decaline, toluene, and xylene. In particular, it is more preferable to use a super dehydrated solvent in which the water content is reduced to 0.001% by mass (10 ppm) or less. It is also possible to use fluorine-based solvents such as "Vertrel (registered trademark)" manufactured by Du Pont-Mitsui Fluorochemicals Co., Ltd., "Zeorora (registered trademark)" manufactured by Zeon Corporation, and "Novec (registered trademark)" manufactured by Sumitomo 3M Limited, and nonaqueous organic solvents such as dichloromethane and diethyl ether.

The solid electrolyte sheet can be obtained by filling the pores of the porous substrate with the slurry as described above, forming a slurry coating film on the surface of the porous substrate, then removing the slurry solvent through drying, and performing compression molding as needed.

Note that, as described above, the method for producing the solid electrolyte sheet is not limited to the above wet process. For example, when pores of the porous substrate are filled with a solid electrolyte (and a binder used as needed), the pores may be filled with the solid electrolyte or a mixture of the solid electrolyte and a binder in a dry process, and compression molding may be performed. Also, in a case where the surface of the porous substrate is covered with the solid electrolyte, a sheet obtained by molding a mixture of the solid electrolyte and the binder may be attached to the surface of a sheet obtained by filling pores of the porous substrate with the solid electrolyte.

### Positive electrode

The positive electrode according to the all-solid-state battery contains a positive electrode mixture containing a positive electrode active material and a solid electrolyte, and examples thereof include a positive electrode having a structure in which a layer (a positive electrode mixture layer) constituted by the molded body made of the positive electrode mixture is formed on a current collector, a positive electrode constituted only by a molded body made of the positive electrode mixture (pellets or the like), a positive electrode in which pores of a conductive porous substrate are filled with a positive electrode mixture containing a positive electrode active material and a solid electrolyte, and the like.

In a case where the all-solid-state battery is a primary battery, it is possible to use the same positive electrode active material that is used in conventionally known nonaqueous electrolyte primary batteries. Specifically, examples thereof include manganese dioxide; lithium-containing manganese oxide [e.g., LiMn₃O₆, composite oxides, which have the same crystal structure (β-type structure, γ-type structure, or a structure in which β-type and γ-type are mixed) as manganese dioxide, and in which the Li content is 3.5% by mass or less, preferably 2% by mass or less, more preferably 1.5% by mass or less, and particularly preferably 1% by mass or less, or the like]; lithium-containing composite oxides such as LiₐTi_{5/3}O₄ (4/3≤a<7/3); vanadium oxide; niobium oxide; titanium oxide; sulfides such as iron disulfide; graphite fluoride; silver sulfides such as Ag₂S; and nickel oxides such as NiO₂.

Also, in a case where the all-solid-state battery is a secondary battery, it is possible to use the same active material as the positive electrode active material that is used in conventionally known nonaqueous electrolyte secondary batteries, that is, an active material capable of intercalating and deintercalating Li (lithium) ions. Specific examples of the positive electrode active material include spinel-type lithium manganese composite oxides represented by Li₁₋ₓMᵣMn₂₋ᵣO₄ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and x and r satisfy 0≤x≤1 and 0≤r≤1), layered compounds represented by LiᵣMn₍₁₋ₛ₋ₜ₎NiₛMₜO₍₂₋ᵤ₎Fᵥ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy 0≤r≤1.2, 0<s<0.5, 0≤t≤0.5, u+v<1, -0.1≤u≤0.2, and 0≤v≤0.1), lithium cobalt composite oxides represented by Li₁₋ₓCo₁₋ᵣMᵣO₂ (where M is at least one element selected from the group consisting ofAl, Mg, Ti, V, Cr, Zr, Fe, Ni, Cu, Zn, Ga, Ge, Nb, Mo, Sn, Sb, and Ba, and x and r satisfy 0≤x≤1 and 0≤r≤0.5), lithium nickel composite oxides represented by Li₁₋ₓNi₁₋ᵣMᵣO₂ (where M is at least one element selected from the group consisting ofAl, Mg, Ti, Zr, Fe, Co, Cu, Zn, Ga, Ge, Nb, Mo, Sn, Sb, and Ba, and x and r satisfy 0≤x≤1 and 0≤r≤0.5), olivine-type composite oxides represented by Li₁₊ₛ₋ₓM₁₋ᵣNᵣPO₄Fₛ (where M is at least one element selected from the group consisting of Fe, Mn, and Co, N is at least one element selected from the group consisting ofAl, Mg, Ti, Zr, Ni, Cu, Zn, Ga, Ge, Nb, Mo, Sn, Sb, V, and Ba, and x, r, and s satisfy 0≤x≤1, 0≤r≤0.5, 0≤s≤1), and pyrophosphate compounds represented by Li₂₋ₓM₁₋ᵣNᵣP₂O₇ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x and r satisfy 0≤x≤2 and 0≤r≤0.5). These compounds may be used alone or in combination of two or more.

In a case where the all-solid-state battery is a secondary battery, the average particle size of the positive electrode active material is preferably 1 µm or more, more preferably 2 µm or more, and preferably 10 µm or less, and more preferably 8 µm or less. Note that the positive electrode active material may be primary particles or secondary particles obtained through aggregation of primary particles. When a positive electrode active material having an average particle diameter in the above range is used, a large interface with the solid electrolyte contained in the positive electrode can be obtained, thus enhancing load properties of the battery.

In a case where the all-solid-state battery is a secondary battery, it is preferable that the positive electrode active material includes, on its surface, a reaction suppressing layer for suppressing a reaction between the positive electrode active material and the solid electrolyte contained in the positive electrode.

If the positive electrode active material comes into direct contact with the solid electrolyte in the molded body made of the positive electrode mixture, there is a risk that the solid electrolyte will be oxidized and a resistive layer will be formed, which will lead to a reduction in ion conductivity in the molded body. It is possible to suppress a reduction in ion conductivity in the molded body due to oxidation of the solid electrolyte by providing the reaction suppressing layer for suppressing a reaction with the solid electrolyte on the surface of the positive electrode active material to prevent direct contact between the positive electrode active material and the solid electrolyte.

The reaction suppressing layer is only required to be made of a material that has ion conductivity and can suppress a reaction between the positive electrode active material and the solid electrolyte. Examples of materials that can constitute the reaction suppressing layer include oxides that include Li and at least one element selected from the group consisting of Nb, P, B, Si, Ge, Ti, and Zr, or more specifically, Nb-containing oxides such as LiNbO₃, and Li₃PO₄, Li₃BO₃, Li₄SiO₄, Li₄GeO₄, LiTiO₃, LiZrO₃, and Li₂WO₄. The reaction suppressing layer may contain only one of these oxides, two or more of these oxides, or a composite compound formed by two or more of these oxides. Among these oxides, Nb-containing oxides are preferably used, and LiNbO₃ is more preferably used.

Preferably, 0.1 to 1.0 part by mass of the reaction suppressing layer is present on the surface of the positive electrode active material relative to 100 parts by mass of the positive electrode active material. When the amount of the reaction suppressing layer is within this range, it is possible to favorably suppress a reaction between the positive electrode active material and the solid electrolyte.

The reaction suppressing layer can be formed on the surface of the positive electrode active material using a sol-gel method, a mechano-fusion method, a CVD method, a PVD method, an ALD method, or the like.

The content of the positive electrode active material in the positive electrode mixture is preferably 60% by mass to 98% by mass.

It is possible to add a conductive assistant to the positive electrode mixture. Specific examples thereof include carbon materials such as graphite (natural graphite, artificial graphite), graphene, carbon black, carbon nanofiber, and carbon nanotubes. Note that, for example, in a case where Ag₂S is used as an active material, conductive Ag is generated during the discharge reaction, and thus a conductive assistant does not need to be added. In a case where a conductive assistant is added to a positive electrode mixture, the content of the conductive assistant is preferably 1% by mass to 10% by mass.

It is possible to add a binder to the positive electrode mixture. Specific examples thereof include fluoropolymer such as PVDF, and acrylic resins. Note that, for example, in a case where favorable moldability can be ensured when a molded body made of the positive electrode mixture is formed without using a binder as in the case where a sulfide-based solid electrolyte is added to the positive electrode mixture (details will be described later), a binder does not need to be added to the positive electrode mixture.

In a case where a binder is required in the positive electrode mixture, the binder content is preferably 15% by mass or less, and preferably 0.5% by mass or more. On the other hand, in a case where the positive electrode mixture contains a sulfide-based solid electrolyte, a preferable binder content is 0.1% by mass or more and 15% by mass or less, and a more preferable binder content is 0.5% by mass or more and 5% by mass or less.

Examples of the solid electrolyte to be added to the positive electrode mixture include solid electrolytes that are the same as the solid electrolytes listed above that can be used in the solid electrolyte sheet. Among the solid electrolytes listed above, it is more preferable to use sulfide-based solid electrolytes because they have high lithium-ion conductivity and also functions for improving the moldability of the positive electrode mixture.

The content of the solid electrolyte in the positive electrode mixture is preferably 4% by mass to 40% by mass.

When a current collector is used in the positive electrode, examples of the current collector include a foil, a punched metal, a net, an expanded metal, and a foamed metal that are made of metal such as aluminum or stainless steel; and carbon sheets.

The positive electrode can be produced using a method for applying a positive electrode mixture-containing composition (paste, slurry, or the like) obtained by dispersing, in a solvent, the positive electrode active material and the solid electrolyte, and a conductive assistant, a binder, and the like that are to be added as needed, to the current collector, drying the composition, and then performing compression molding such as calendaring as necessary, to form a molded body (positive electrode mixture layer) made of the positive electrode mixture on the surface of the current collector.

Water or an organic solvent such as N-methyl-2-pyrrolidone (NMP) can be used as the solvent in the positive electrode mixture-containing composition. However, when a solid electrolyte that is highly reactive to water is used, it is desirable to select a solvent that is less likely to deteriorate the solid electrolyte, and it is preferable to use any of the above-listed various examples of solvents for the slurry for forming a solid electrolyte sheet.

Also, in addition to the above method, a molded body made of a positive electrode mixture may be formed by compressing, using compression molding or the like, the positive electrode mixture prepared by mixing the positive electrode active material, and a solid electrolyte with a conductive assistant, a binder, and the like that are added as needed, for example. The molded body made of the positive electrode mixture obtained using such a method can also be used directly as a positive electrode as described above, or a molded body to which a current collector is press-bonded or the like can also be used as a positive electrode.

The molded body made of a positive electrode mixture (a positive electrode mixture layer) formed using a positive electrode mixture-containing composition that contains a solvent preferably has a thickness (when a current collector is provided, the thickness per side of the current collector) of 10 to 1000 µm. Further, the molded body made of a positive electrode mixture obtained through compression molding preferably has a thickness of 0.15 to 4 mm.

The current collector at the positive electrode preferably has a thickness of 0.01 to 0.1 mm.

Also, in a case where a conductive porous substrate such as punched metal is used for a positive electrode current collector, for example, the positive electrode can be produced using a method for filling pores of the conductive porous substrate with the positive electrode mixture-containing composition, drying the composition, and performing compression molding such as calendering as needed. The positive electrode produced using such a method readily has high strength, thus making it possible to hold a solid electrolyte sheet with a larger area.

Furthermore, a positive electrode may be produced using a method for filling, in a dry process, pores of a conductive porous substrate with a positive electrode mixture that does not contain a solvent and contains a positive electrode active material, a solid electrolyte, a conductive assistant, a binder, and the like instead of the positive electrode mixture-containing composition, and performing compression molding such as calendering as needed.

A positive electrode obtained using a method for filling pores of a conductive porous substrate with a positive electrode mixture-containing composition or a positive electrode mixture preferably has a thickness of 30 to 4000 µm.

### Negative electrode

A negative electrode of the all-solid-state battery includes, for example, a molded body made of a negative electrode mixture containing a negative electrode active material, a lithium sheet, or a lithium alloy sheet. Further, pores of a conductive porous substrate may be filled with a negative electrode mixture containing a negative electrode active material, and the resultant may be used as a negative electrode.

In a case where the negative electrode is a molded body made of a negative electrode mixture containing a negative electrode active material, examples thereof include a negative electrode having a structure in which a layer (a negative electrode mixture layer) constituted by the molded body made of the negative electrode mixture is formed on a current collector, a negative electrode constituted only by a molded body made of the negative electrode mixture (pellets or the like), and the like.

In a case where the negative electrode has a molded body made of a negative electrode mixture, examples of the negative electrode active material thereof include carbon materials such as graphite, simple substances and compounds (such as oxides) that contain elements such as Si or Sn, and alloys thereof. It is also possible to use, as negative electrode active materials, lithium metal and lithium alloys (lithium-aluminum alloy, lithium-indium alloy, and the like).

The content of the negative electrode active material in the negative electrode mixture is preferably 10% by mass to 99% by mass.

It is possible to add a conductive assistant to the negative electrode mixture. Specific examples thereof include conductive assistants that are the same as those listed above to be added to the positive electrode mixture. The content of the conductive assistant in the negative electrode mixture is preferably 1% by mass to 10% by mass.

Also, it is possible to add a binder to the negative electrode mixture. Specific examples thereof include binders that are the same as those listed above to be added to the positive electrode mixture. Note that, for example, in a case where favorable moldability can be ensured when a molded body made of the negative electrode mixture is formed without using a binder as in the case where a sulfide-based solid electrolyte is added to the negative electrode mixture (details will be described later), a binder does not need to be added to the negative electrode mixture.

In a case where a binder is required in the negative electrode mixture, the binder content is preferably 15% by mass or less, and preferably 0.5% by mass or more. On the other hand, in a case where the negative electrode mixture contains a sulfide-based solid electrolyte, a preferable binder content is 0.3% by mass or more and 15% by mass or less, and a more preferable binder content is 0.7% by mass or more and 7% by mass or less.

In the case of the negative electrode having a molded body made of a negative electrode mixture, a solid electrolyte is added to the negative electrode mixture. Specific examples thereof include solid electrolytes that are the same as the solid electrolytes listed above that can be used in the solid electrolyte sheet. Among the solid electrolytes listed above, it is more preferable to use sulfide-based solid electrolytes because they have high lithium-ion conductivity and also functions for improving the moldability of the negative electrode mixture.

The content of the solid electrolyte in the negative electrode mixture is preferably 4% by mass to 49% by mass.

When a current collector is used in the negative electrode having a molded body made of a negative electrode mixture, examples of the current collector include a foil, a punched metal, a net, an expanded metal, and a foamed metal that are made of copper or nickel; and carbon sheets.

The negative electrode can be produced using a method for applying a negative electrode mixture-containing composition (paste, slurry, or the like) obtained by dispersing, in a solvent, the negative electrode active material, and a conductive assistant, a solid electrolyte, a binder, and the like that are to be added as needed, to the current collector, drying the composition, and then performing compression molding such as calendaring as necessary, to form a molded body (negative electrode mixture layer) made of the negative electrode mixture on the surface of the current collector.

Water or an organic solvent such as NMP can be used as the solvent in the negative electrode mixture-containing composition. However, when a solid electrolyte is also added to the negative electrode mixture-containing composition, it is desirable to select a solvent that is less likely to deteriorate the solid electrolyte, and it is preferable to use any of the above-listed various examples of solvents for the slurry for forming a solid electrolyte sheet.

Also, in addition to the above method, a molded body made of a negative electrode mixture may be formed by compressing, using compression molding or the like, the negative electrode mixture prepared by mixing the negative electrode active material, and a conductive assistant, a solid electrolyte, and a binder and the like that are added as needed. As described above, the molded body made of the negative electrode mixture obtained using such a method can also be used directly as a negative electrode, or a molded body to which a current collector is press-bonded or the like can also be used as a negative electrode.

The molded body made of a negative electrode mixture (a negative electrode mixture layer) formed using a negative electrode mixture-containing composition that contains a solvent preferably has a thickness (when a current collector is provided, the thickness per side of the current collector) of 10 to 1000 µm. Further, the molded body made of a negative electrode mixture obtained through compression molding preferably has a thickness of 0.15 to 4 mm.

The current collector at the negative electrode preferably has a thickness of 0.01 to 0.1 mm.

In a case where a negative electrode has a lithium sheet or a lithium alloy sheet, sheets constituted only by lithium sheets or lithium alloy sheets, or sheets obtained by bonding these sheets to current collectors are used.

Examples of alloying elements for lithium alloys include aluminum, lead, bismuth, indium, and gallium, and aluminum and indium are preferable. The percentage of alloying elements in a lithium alloy (in a case where the lithium alloy contains a plurality of types of alloying elements, the percentage of these alloying elements) is preferably 50 atomic% or less (in this case, the remaining portion is lithium and inevitable impurities).

Also, in a case where a negative electrode has a sheet made of a lithium alloy, a stacked body is prepared by stacking a layer that contains an alloying element for forming a lithium alloy on the surface of a lithium layer (a layer containing lithium) constituted by a lithium metal foil or the like through press-bonding, for example, and the negative electrode can be prepared by forming a lithium alloy on the surface of the lithium layer by bringing the stacked body into contact with a solid electrolyte in a battery. In the case of such a negative electrode, a stacked body having a layer containing an alloying element on only one surface of the lithium layer may be used, or a stacked body having a layer containing an alloying element on both surfaces of the lithium layer may also be used. The stacked body can be formed, for example, by press-bonding a lithium metal foil and a foil made of an alloying element to each other.

Further, a current collector can also be used when a lithium alloy is formed in a battery to form a negative electrode. For example, a stacked body having a lithium layer on one surface of a negative electrode current collector and a layer containing an alloying element on a surface of the lithium layer opposite to the negative electrode current collector may be used, or a stacked body having lithium layers on both surfaces of the negative electrode current collector and a layer containing an alloying element on a surface of each lithium layer opposite to the negative electrode current collector may be used. The negative electrode current collector and the lithium layer (lithium metal foil) may be stacked on each other through press-bonding or the like.

It is possible to use, for example, a foil made of these alloying elements or the like, for the layer containing the alloying element according to the stacked body used as a negative electrode. The thickness of the layer containing the alloying element is preferably 1 µm or more, more preferably 3 µm or more, preferably 20 µm or less, and more preferably 12 µm or less.

It is possible to use, for example, a lithium metal foil or the like for the lithium layer according to the stacked body used as a negative electrode. The lithium layer preferably has a thickness of 0.1 to 1.5 mm. Further, the sheet according to the negative electrode having a lithium sheet or a lithium alloy sheet also preferably has a thickness of 0.1 to 1.5 mm.

In a case where the negative electrode having a lithium sheet or a lithium alloy sheet has a current collector, it is possible to use, for the current collector, the same current collector as those listed above that can be used for a negative electrode having a molded body made of a negative electrode mixture.

Also, in a case where a conductive porous substrate such as punched metal is used for a negative electrode current collector, for example, the negative electrode can be produced using a method for filling pores of the conductive porous substrate with the negative electrode mixture-containing composition, drying the composition, and performing compression molding such as calendering as needed. The negative electrode produced using such a method readily has high strength, thus making it possible to hold a solid electrolyte sheet with a larger area.

Furthermore, a negative electrode may be produced using a method for filling, in a dry process, pores of a conductive porous substrate with a negative electrode mixture that does not contain a solvent and contains a negative electrode active material, a solid electrolyte, a binder, a conductive assistant, and the like instead of the negative electrode mixture-containing composition, and performing compression molding such as calendering as needed.

A negative electrode obtained using a method for filling pores of a conductive porous substrate with a negative electrode mixture-containing composition or a negative electrode mixture preferably has a thickness of 30 to 4000 µm.

### Stacked body (electrode body)

The positive electrode and the negative electrode can be used for an all-solid-state battery in the form of a stacked electrode body obtained by stacking these electrodes with the solid electrolyte sheet being located therebetween or in the form of a rolled-up electrode body obtained by rolling up the above-mentioned stacked electrode body.

Note that it is preferable to form the stacked body by performing compression molding in the state in which the positive electrode, the negative electrode, and the solid electrolyte sheet are stacked, from the viewpoint of enhancing the mechanical strength of the stacked body (note that, in this case, the thickness of the solid electrolyte sheet obtained after compression molding satisfies the above values).

### Form of all-solid-state battery

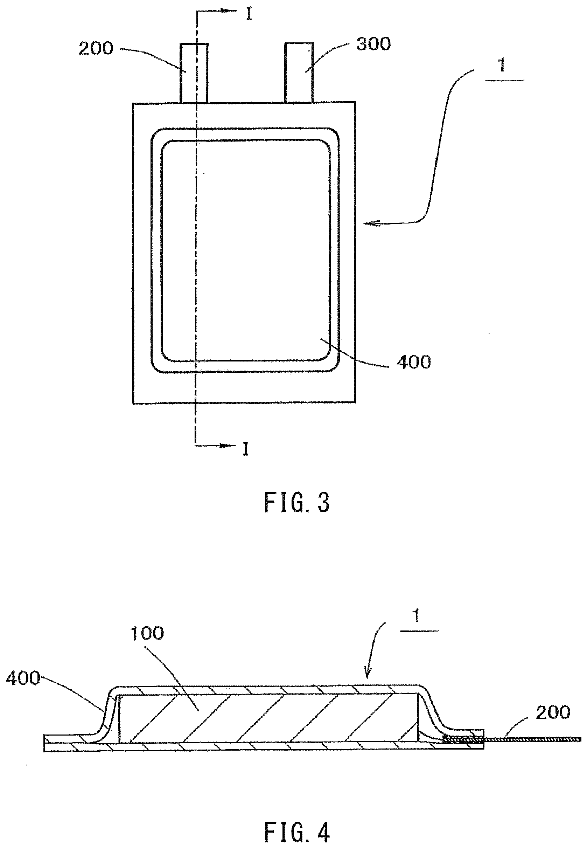

FIGS. 3 and 4 schematically show one example of an all-solid-state battery. FIG. 3 is a plan view of the all-solid-state battery, and FIG. 4 is a cross-sectional view taken along line I-I of FIG. 3.

An all-solid-state battery 1 shown in FIGS. 3 and 4 has a configuration in which a stacked body 100 is housed in a laminate-film exterior body 400 formed using two metal laminate films, and the laminate-film exterior body 400 is sealed by thermally welding the outer peripheral regions of the upper and lower metal laminate films to each other. The stacked body 100 is constructed by stacking the positive electrode, the negative electrode, and the solid electrolyte sheet interposed therebetween.

Note that the layers included in the laminate-film exterior body 400, and constitutional elements (the positive electrode, the negative electrode, and the solid electrolyte sheet) that form the stacked body 100 are not distinctively shown in FIG. 4 in order to keep FIG. 4 from being complicated.

The positive electrode included in the stacked body 100 is connected to a positive electrode external terminal 200 in the all-solid-state battery 1, and while not shown, the negative electrode included in the stacked body 100 is also connected to a negative electrode external terminal 300 in the all-solid-state battery 1. One end of the positive electrode external terminal 200 and one end of the negative electrode external terminal 300 are drawn out of the laminate-film exterior body 400 so as to enable connection to external devices and the like.

There is no particular limitation on the form of all-solid-state batteries, and an all-solid-state battery can take various forms such as being flat (including coin and button shapes), and being tubular [cylindrical forms, quadrangular forms (rectangular cylindrical forms)], in addition to having a sheet-shape (laminate shape) as shown in FIG. 3. Also, it is possible to use, as the exterior body (a battery case) in which the stacked body having the negative electrode, the positive electrode, and the solid electrolyte sheet is housed, a metal laminate film, or a metal can (an exterior can) having an opening combined with a lid (sealing can).

Specifically, a sheet-shaped (laminated) battery can be produced by stacking two metal laminate films or folding one metal laminate film, and then sealing the resulting stack with their peripheries bonded together. Aflat-shaped (coin-shaped, button-shaped, or the like) battery or a tubular battery can be produced by crimping an exterior can and a sealing can to each other via a gasket and sealing the crimped cans, or by welding and sealing an exterior can and a sealing can to each other.

Note that, in a case where an exterior body having a form for crimping and sealing is used, polypropylene (PP), nylon, or the like can be used as the material of the gasket interposed between the exterior can and the sealing can. In addition, when a high degree of heat resistance is required according to the application of a battery, the gasket may be made of heat-resistant resin whose melting point or pyrolysis temperature is 200°C or higher, such as: a fluorocarbon resin, e.g., a tetrafluoroethylene-perfluoroalkoxyethylene copolymer (PFA); polyphenylene ether (PPE); polysulfone (PSF); polyarylate (PAR); polyether sulfone (PES); polyphenylene sulfide (PPS); and polyether ether ketone (PEEK). Further, when a battery is used for an application where heat resistance is required, a glass hermetic seal can also be used to seal the battery.

The shape of the exterior body in a plan view may be a circular or polygonal shape such as quadrilateral shape (square or rectangle). Also, in the case of a polygonal battery, the corners may be curved.

### Examples

Hereinafter, the present invention will be described in detail based on examples. However, the examples below do not limit the present invention.

### Example 1

### Production of solid electrolyte sheet

A uniform slurry was prepared by mixing, using xylene ("super dehydrated" grade) as a solvent, sulfide-based solid electrolyte (Li₆PS₅Cl) particles having an average particle size of 1 µm, an acrylic resin binder, and a dispersant in a mass ratio of 100:3:1 to a solid content percentage of 40%, and stirring the mixture for 10 minutes using a thinky mixer. A PET nonwoven fabric ("05TH-8" manufactured by Hirose Paper MFG. Co., Ltd.) having a thickness of 15 µm and a basis weight of 8 g/m² was passed through the slurry, the slurry was then applied to the PET nonwoven fabric by pulling the nonwoven fabric up using an applicator through a 40-µm gap at an angle of 45 degrees with respect to its bottom surface, and the nonwoven fabric was dried in a vacuum at 120°C for 1 hour to obtain a solid electrolyte sheet. The percentage of the binder in the total amount of the solid electrolyte particles and the binder in the solid electrolyte sheet was 2.9% by mass.

### Production of positive electrode

A uniform slurry was prepared by mixing, using xylene ("super dehydrated" grade) as a solvent, LiNi_{0.6}Co_{0.2}Mn_{0.2}O₂ particles having an average particle size of 3 µm and an amorphous composite oxide of Li and Nb formed on their surfaces, a sulfide solid electrolyte (Li₆PS₅Cl), carbon nanotubes ("VGCF" (trade name) manufactured by Showadenko Co., Ltd.) serving as a conductive assistant, and an acrylic resin binder in a mass ratio of 70:24:3:3 to a solid content percentage of 60%, and stirring the mixture for 10 minutes using a thinky mixer. The slurry was applied onto an Al foil with a thickness of 20 µm using an applicator with a gap of 200 µm, and drying was carried out in a vacuum at 120°C to obtain a positive electrode.

### Production of negative electrode

A uniform slurry was prepared by mixing, using xylene ("super dehydrated" grade) as a solvent, graphite particles having an average particle size of 20 µm, a sulfide solid electrolyte (Li₆PS₅Cl), carbon nanotubes ("VGCF" (trade name) manufactured by Showadenko Co., Ltd.) serving as a conductive assistant, and an acrylic resin binder in a mass ratio of 50:44:3:3 to a solid content percentage of 50%, and stirring the mixture for 10 minutes using a thinky mixer. The slurry was applied onto a SUS foil with a thickness of 20 µm using an applicator with a gap of 160 µm, and drying was carried out in a vacuum at 120°C to obtain a negative electrode.

### Assembly of battery

The positive electrode, the negative electrode, and the solid electrolyte sheet were all punched into a size of 10 mmϕ, stacked in the order of the positive electrode, the solid electrolyte sheet, and the negative electrode between upper and lower SUS pins, placed in a PET tube, pressurized at 10 tons/cm², and directly used as a cell (all-solid-state secondary battery) that can be charged and discharged in a sealed state where the cell does not come into contact with an atmosphere. Note that, in a stacked body formed by stacking the positive electrode, the solid electrolyte sheet, and the negative electrode in the stated order, the surface of the solid electrolyte sheet located on the bottom surface side when the slurry was applied using the applicator was made to face the negative electrode.

For some of a plurality of the cells produced, stacked bodies in which the positive electrode, the solid electrolyte sheet, and the negative electrode were stacked in the stated order were taken out, and the above methods were used to check whether both surfaces of a porous substrate in each solid electrolyte sheet were covered with the solid electrolyte, the porous substrate was located biased toward the positive electrode, and solid electrolyte particles were retained in pores of the porous substrate. Also, as for each stacked body, the distance (A) on the positive electrode side, the distance (B) on the negative electrode side, the thickness of the porous substrate (PET nonwoven fabric), and the thickness of the solid electrolyte sheet, which were measured using the above methods, were respectively 1 µm, 5 µm, 15 µm, and 21 µm, and the thickness of the porous substrate was 71% of the thickness of the solid electrolyte sheet.

### Example 2

A solid electrolyte sheet was produced in the same manner as in Example 1, except that, when the slurry was applied to a PET nonwoven fabric, the nonwoven fabric was pulled up using the applicator through a 50-µm gap at an angle of 45 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the above methods were used to check whether both surfaces of a porous substrate in the solid electrolyte sheet were covered with the solid electrolyte, the porous substrate in the solid electrolyte sheet was located biased toward the positive electrode, and solid electrolyte particles were retained in pores of the porous substrate. Also, as for the stacked body, the distance (A) on the positive electrode side, the distance (B) on the negative electrode side, the thickness of the porous substrate, and the thickness of the solid electrolyte sheet, which were measured using the above methods, were respectively 5 µm, 10 µm, 15 µm, and 30 µm, and the thickness of the porous substrate was 50% of the thickness of the solid electrolyte sheet.

### Example 3

A solid electrolyte sheet was produced in the same manner as in Example 1, except that, when the slurry was applied to a PET nonwoven fabric, the nonwoven fabric was pulled up using the applicator through a 30-µm gap at an angle of 45 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the above methods were used to check whether both surfaces of a porous substrate in the solid electrolyte sheet were covered with the solid electrolyte, the porous substrate in the solid electrolyte sheet was located biased toward the positive electrode, and solid electrolyte particles were retained in pores of the porous substrate. Also, as for the stacked body, the distance (A) on the positive electrode side, the distance (B) on the negative electrode side, the thickness of the porous substrate, and the thickness of the solid electrolyte sheet, which were measured using the above methods, were respectively 1 µm, 3 µm, 15 µm, and 19 µm, and the thickness of the porous substrate was 79% of the thickness of the solid electrolyte sheet.

### Example 4

A solid electrolyte sheet was produced in the same manner as in Example 1, except that, when the slurry was applied to a PET nonwoven fabric, the nonwoven fabric was pulled up using the applicator through a 20-µm gap at an angle of 45 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the above methods were used to check whether both surfaces of a porous substrate in the solid electrolyte sheet were covered with the solid electrolyte, the porous substrate in the solid electrolyte sheet was located biased toward the positive electrode, and solid electrolyte particles were retained in pores of the porous substrate. Also, as for the stacked body, the distance (A) on the positive electrode side, the distance (B) on the negative electrode side, the thickness of the porous substrate, and the thickness of the solid electrolyte sheet, which were measured using the above methods, were respectively 1 µm, 3 µm, 6 µm, and 10 µm, and the thickness of the porous substrate was 60% of the thickness of the solid electrolyte sheet.

### Example 5

A solid electrolyte sheet was produced in the same manner as in Example 1, except that, when the slurry was applied to a PET nonwoven fabric, the nonwoven fabric was pulled up using the applicator through a 60-µm gap at an angle of 45 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the above methods were used to check whether both surfaces of a porous substrate in the solid electrolyte sheet were covered with the solid electrolyte, the porous substrate in the solid electrolyte sheet was located biased toward the positive electrode, and solid electrolyte particles were retained in pores of the porous substrate. Also, as for the stacked body, the distance (A) on the positive electrode side, the distance (B) on the negative electrode side, the thickness of the porous substrate, and the thickness of the solid electrolyte sheet, which were measured using the above methods, were respectively 1 µm, 3 µm, 46 µm, and 50 µm, and the thickness of the porous substrate was 92% of the thickness of the solid electrolyte sheet.

### Example 6

A solid electrolyte sheet was produced in the same manner as in Example 1, except that, when the slurry was applied to a PET nonwoven fabric, the nonwoven fabric was pulled up using the applicator through a 60-µm gap at an angle of 50 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the above methods were used to check whether both surfaces of a porous substrate in the solid electrolyte sheet were covered with the solid electrolyte, the porous substrate in the solid electrolyte sheet was located biased toward the positive electrode, and solid electrolyte particles were retained in pores of the porous substrate. Also, as for the stacked body, the distance (A) on the positive electrode side, the distance (B) on the negative electrode side, the thickness of the porous substrate, and the thickness of the solid electrolyte sheet, which were measured using the above methods, were respectively 5 µm, 20 µm, 15 µm, and 40 µm, and the thickness of the porous substrate was 38% of the thickness of the solid electrolyte sheet.

### Example 7

A solid electrolyte sheet was produced in the same manner as in Example 1, except that, when the slurry was applied to a PET nonwoven fabric, the nonwoven fabric was pulled up using the applicator through a 15-µm gap at an angle of 45 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the above methods were used to check whether both surfaces of a porous substrate in the solid electrolyte sheet were covered with the solid electrolyte, the porous substrate in the solid electrolyte sheet was located biased toward the positive electrode, and solid electrolyte particles were retained in pores of the porous substrate. Also, as for the stacked body, the distance (A) on the positive electrode side, the distance (B) on the negative electrode side, the thickness of the porous substrate, and the thickness of the solid electrolyte sheet, which were measured using the above methods, were respectively 1 µm, 3 µm, 5 µm, and 9 µm, and the thickness of the porous substrate was 56% of the thickness of the solid electrolyte sheet.

### Comparative Example 1

A solid electrolyte sheet was produced in the same manner as in Example 1, except that, when the slurry was applied to a PET nonwoven fabric, the nonwoven fabric was pulled up using the applicator through a 30-µm gap at an angle of 60 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the position of the porous substrate in the solid electrolyte sheet was checked using the above method. It was found that the porous substrate was located biased toward the positive electrode, but the surface on the positive electrode side of the porous substrate was not covered with the solid electrolyte. It was also confirmed that the solid electrolyte particles were retained in the pores of the porous substrate. Further, as for the stacked body, the distance (A) on the positive electrode side, the distance (B) on the negative electrode side, the thickness of the porous substrate, and the thickness of the solid electrolyte sheet, which were measured using the above methods, were respectively 0 µm, 5 µm, 15 µm, and 20 µm, and the thickness of the porous substrate was 75% of the thickness of the solid electrolyte sheet.

### Comparative Example 2

A solid electrolyte sheet was produced in the same manner as in Example 1, except that, when the slurry was applied to a PET nonwoven fabric, the nonwoven fabric was pulled up using the applicator through a 40-µm gap at an angle of 10 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the position of the porous substrate in the solid electrolyte sheet was checked using the above method. It was found that the porous substrate was located biased toward the negative electrode. It was also confirmed that the solid electrolyte particles were retained in the pores of the porous substrate. Further, as for the stacked body, the distance (A) on the positive electrode side, the distance (B) on the negative electrode side, the thickness of the porous substrate, and the thickness of the solid electrolyte sheet, which were measured using the above methods, were respectively 5 µm, 2 µm, 15 µm, and 22 µm, and the thickness of the porous substrate was 68% of the thickness of the solid electrolyte sheet.

### Comparative Example 3

A solid electrolyte sheet was produced in the same manner as in Example 1, except that, when the slurry was applied to a PET nonwoven fabric, the nonwoven fabric was pulled up using the applicator through a 30-µm gap at an angle of 0 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the position of the porous substrate in the solid electrolyte sheet was checked using the above method. It was found that the porous substrate was located biased toward the negative electrode, and the surface on the negative electrode side of the porous substrate was not covered with the solid electrolyte. It was also confirmed that the solid electrolyte particles were retained in the pores of the porous substrate. Further, as for the stacked body, the distance (A) on the positive electrode side, the distance (B) on the negative electrode side, the thickness of the porous substrate, and the thickness of the solid electrolyte sheet, which were measured using the above methods, were respectively 5 µm, 0 µm, 15 µm, and 20 µm, and the thickness of the porous substrate was 75% of the thickness of the solid electrolyte sheet.

### Comparative Example 4

A solid electrolyte sheet was produced in the same manner as in Example 1, except that, when the slurry was applied to a PET nonwoven fabric, the nonwoven fabric was pulled up using the applicator through a 15-µm gap at an angle of 30 degrees with respect to its bottom surface, and a cell (an all-solid-state secondary battery) was produced in the same manner as in Example 1, except that this solid electrolyte sheet was used.

For some of a plurality of the cells produced, stacked bodies in which the positive electrode, the solid electrolyte sheet, and the negative electrode were stacked in the stated order were taken out, and the position of the porous substrate in the solid electrolyte sheet was checked using the above method. It was found that the porous substrate was not biased toward any surface, and both surfaces of the porous substrate were not covered with the solid electrolyte. It was also confirmed that the solid electrolyte particles were retained in the pores of the porous substrate. Further, as for the stacked body, the distance (A) on the positive electrode side, the distance (B) on the negative electrode side, the thickness of the porous substrate, and the thickness of the solid electrolyte sheet, which were measured using the above methods, were respectively 0 µm, 0 µm, 15 µm, and 15 µm, and the thickness of the porous substrate was 100% of the thickness of the solid electrolyte sheet.

The cells of Examples and Comparative Examples, and the solid electrolyte sheets used in these cells were evaluated as follows.

### Evaluation of charging properties

Each of the cells of Examples and Comparative Examples was charged to a voltage of 4.2 V with a constant current at a current value of 0.05 C, subsequently charged with a constant voltage of 4.2 V until the current value reached 0.01 C, and then discharged at a constant current value of 0.05 C until the voltage reached 2.0 V The capacity during constant current charging and constant voltage charging (charge capacity) and the capacity during constant current discharging (discharge capacity) were measured. Then, the charging/discharging efficiency of each cell was determined by expressing the ratio of the discharge capacity to the charge capacity, using a percentage. The charging/discharging efficiency of 100 cells of each of Examples and Comparative Examples was determined, it was determined that cells having a charging/discharging efficiency of 50% or less had charge abnormalities, and a percent defective (%), which is the percentage of the number of cells in which charge abnormalities had occurred, was calculated.

### Evaluation of occurrence of short circuiting prior to charging

For each cell of Examples and Comparative Examples, the battery voltage was measured after assembly and before charging. A cell having a voltage of 0.2 V or more in the evaluation was evaluated as being "good", a cell having a voltage of 0.1 V or more was evaluated as being "fair", and a cell having a voltage of less than 0.1 V was evaluated as being "poor". Batteries evaluated as being "good" and "fair" suppressed the occurrence of short circuiting before charging was performed.

### Evaluation of discharge load properties

For each cell of Examples, constant current charging and constant voltage charging were performed under the same conditions as in the evaluation of charging properties, and then discharge capacity (5 C discharge capacity) was determined by performing constant current discharging under the same conditions as in the evaluation of charging properties, except that the current value was changed to 5 C. Then, the capacity maintenance percentage of each cell was determined by dividing the 5 C discharge capacity by the discharge capacity (0.05 C discharge capacity) determined in the evaluation of charging properties, and expressing the obtained value using a percentage. Then, the discharge load properties of each battery were evaluated. A cell having a capacity maintenance percentage of 35% or more in the evaluation was evaluated as being "good", a cell having a capacity maintenance percentage of 20% or more was evaluated as being "fair", and a cell having a capacity maintenance percentage of less than 20% was evaluated as being "poor". It can be said that batteries evaluated as being "good" and "fair" had favorable discharge load properties.

### Evaluation of handle ability of solid electrolyte sheet

For each cell of Examples and Comparative Examples, a stacked body of the positive electrode, the solid electrolyte sheet, and the negative electrode was placed in a PET cylinder, pressure was applied thereto, and then the state of peeling between the solid electrolyte sheet and electrodes (the positive electrode and/or the negative electrode) was checked. A cell in which no peeling occurred in the evaluation was evaluated as being "good", a cell in which the area of a peeled portion was less than 1/3 of the cell area was evaluated as being "fair", and a cell in which the area of a peeled portion was 1/3 of the cell area or more was evaluated as being "poor". It can be said that solid electrolyte sheets evaluated as being "good" and "fair" had favorable handleability.

Table 1 shows configurations of the solid electrolyte sheets used in the cells of Examples and Comparative Examples, and Table 2 shows the results of the evaluation. The term "Percentage of Thickness" in the porous substrate column in Table 1 refers to the ratio of the thickness of the porous substrate to the thickness of the solid electrolyte sheet. Also, "-" in the "Discharge load properties" column in Table 2 means that no evaluation was given.

**Table 1**

| | Solid Electrolyte Sheet | | | | |
|---|---|---|---|---|---|
| | Thickness (µm) | Distance (A) on Positive Electrode Side (µm) | Distance (B) on Negative Electrode Side (µm) | Porous Substrate | |
| | | | | Thickness (µm) | Percentage of Thickness (%) |
| Ex. 1 | 21 | 1 | 5 | 15 | 71 |
| Ex. 2 | 30 | 5 | 10 | 15 | 50 |
| Ex. 3 | 19 | 1 | 3 | 15 | 79 |
| Ex. 4 | 10 | 1 | 3 | 6 | 60 |
| Ex. 5 | 50 | 1 | 3 | 46 | 92 |
| Ex. 6 | 40 | 5 | 20 | 15 | 38 |
| Ex. 7 | 9 | 1 | 3 | 5 | 56 |
| Comp. Ex. 1 | 20 | 0 | 5 | 15 | 75 |
| Comp. Ex. 2 | 22 | 5 | 2 | 15 | 68 |
| Comp. Ex. 3 | 20 | 5 | 0 | 15 | 75 |
| Comp. Ex. 4 | 15 | 0 | 0 | 15 | 100 |

**Table 2**

| | Cell | | | Handleability of Solid Electrolyte Sheet |
|---|---|---|---|---|
| | Percent Defective (%) | Short Circuiting prior to Charging | Discharge Load Properties | |
| Ex. 1 | 7 | Good | Good | Good |
| Ex. 2 | 0 | Good | Good | Good |
| Ex. 3 | 10 | Good | Good | Good |
| Ex. 4 | 10 | Fair | Good | Good |
| Ex. 5 | 10 | Good | Poor | Good |
| Ex. 6 | 0 | Good | Good | Poor |
| Ex. 7 | 10 | Poor | Good | Good |
| Comp. Ex. 1 | 45 | Good | - | Good |
| Comp. Ex. 2 | 15 | Good | - | Good |
| Comp. Ex. 3 | 70 | Good | - | Good |
| Comp. Ex. 4 | 90 | Good | - | Good |

As shown in Tables 1 and 2, the cells of Examples 1 to 7 in which the solid electrolyte sheet, which contained a porous substrate and a solid electrolyte, in which the solid electrolyte was retained in pores of the porous substrate, and in which both surfaces of the porous substrate were covered with the solid electrolyte, was used, and each cell having an electrode body disposed such that the porous substrate was located biased toward the positive electrode, had a low percent defective, and when a plurality of these cells were produced, the number of cells that were found to have charging abnormalities was reduced, and thus these cells had excellent productivity.

In contrast, the cell of Comparative Example 1, which had the solid electrolyte sheet in which the porous substrate was located biased toward the positive electrode, but the surface on the positive electrode side of the porous substrate was not covered with the solid electrolyte, the cell of Comparative Example 2, which had the solid electrolyte sheet in which the porous substrate was located biased toward the negative electrode, the cell of Comparative Example 3, which had the solid electrolyte sheet in which the porous substrate was located biased toward the negative electrode, and the surface on the negative electrode side of the porous substrate was not covered with the solid electrolyte, and the cell of Comparative Example 4, which had the solid electrolyte sheet in which both surfaces of the porous substrate were not covered with the solid electrolyte, had a high percentage defective and were poor in terms of productivity.

Note that the cells of Examples 1 to 3, and 6, in which the thickness of the entire solid electrolyte sheet and the thickness of the porous substrate were more suitable, favorably suppressed short circuiting before charging was performed, and had good discharge load properties. Compared to the solid electrolyte sheets used in these cells, the cell of Example 4, which had a slightly thinner solid electrolyte sheet and a slightly thinner porous substrate, had a slightly inferior effect of suppressing short circuiting before charging was performed, and the cell of Example 7, which had a thinner solid electrolyte sheet and porous substrate than those of Example 4, was less effective in suppressing short circuiting before charging was performed. Also, compared to the solid electrolyte sheets used in the cells of Examples 1 to 3, and 6, the cell of Example 5, in which the solid electrolyte sheet having a thick porous substrate was used, had inferior discharge load properties.

Furthermore, in the cell of Example 6, the thickness of the solid electrolyte covering one surface of the used solid electrolyte sheet was larger than the thickness of the solid electrolyte covering the other surface, as a result, the difference between the distance (A) and the distance (B) had a relatively large value, but these solid electrolyte sheets were likely to curl and peel off from an electrode in the stacked body. Thus, the cell of Example 6 had poor handleability, compared to the solid electrolyte sheet used in other examples.

### Industrial Applicability

An all-solid-state battery according to the present invention can be applied to the same applications as conventionally known primary batteries and secondary batteries, but the all-solid-state battery has great heat resistance because it has a solid electrolyte instead of an organic electrolyte. Therefore, the all-solid-state battery according to the present invention can be preferably used in applications in which the battery is exposed to high temperatures.

### Description of Reference Numerals

- 1: All-solid-state battery

- 10: Positive electrode
- 11: Positive electrode active material
- 20: Negative electrode
- 30: Solid electrolyte sheet
- 31: Porous substrate
- 32a, 32b: Solid electrolyte
- 100: Stacked body of positive electrode, negative electrode, and solid electrolyte sheet
- 200: Positive electrode external terminal
- 300: Negative electrode external terminal
- 400: Laminate-film exterior body

## Claims

1. An all-solid-state battery (1) comprising:
a stacked body (100) provided with a positive electrode (10), a negative electrode (20), and a solid electrolyte sheet (30) interposed between the positive electrode (10) and the negative electrode (20),
wherein the solid electrolyte sheet (30) contains a porous substrate (31) and a solid electrolyte (32a, 32b), the solid electrolyte (32a, 32b) is retained in pores of the porous substrate (31), and both surfaces of the porous substrate (31) are covered with the solid electrolyte (32a, 32b),
**characterised in that** in the solid electrolyte sheet (30), the porous substrate (31) is located biased toward the positive electrode (10) in a thickness direction of the solid electrolyte sheet (30), and
the solid electrolyte sheet (30) has a thickness of 50 µm or less.

2. The all-solid-state battery (1) according to claim 1,
wherein, on the negative electrode side of the solid electrolyte sheet (30), a distance between a surface of the porous substrate (31) and a negative electrode active material contained in the negative electrode (20) in the thickness direction of the stacked body (100) is 3 µm or more.

3. The all-solid-state battery (1) according to claim 1 or 2,
wherein the thickness of the porous substrate (31) is in a range of 30% to 85% of the thickness of the solid electrolyte sheet (30).

4. The all-solid-state battery (1) according to claim 1 or 2,
wherein the solid electrolyte sheet (30) has a thickness of 5 µm or more.

5. The all-solid-state battery (1) according to claim 1,
wherein the porous substrate (31) is constituted by fibrous articles.

6. The all-solid-state battery (1) according to claim 5,
wherein the fibrous articles are made of cellulose, modified cellulose, polyolefin, polyester, polyarylate, aramid, polyamide-imide, polyimide, glass, alumina, or silica.

7. The all-solid-state battery (1) according to claim 1, 5, or 6,
wherein the porous substrate (31) is a nonwoven fabric.

8. The all-solid-state battery (1) according to claim 1,
wherein the solid electrolyte sheet (30) contains solid electrolyte particles as the solid electrolyte (32a, 32b).

9. The all-solid-state battery (1) according to claim 8,
wherein the solid electrolyte particles have an average particle size of 0.3 to 5 µm.

10. The all-solid-state battery (1) according to claim 8 or 9,
wherein the solid electrolyte sheet (30) contains sulfide-based solid electrolyte particles as the solid electrolyte particles.

## Patentansprüche

1. Festkörperbatterie (1), umfassend:
einen Stapel-Hauptteil (100) mit einer positiven Elektrode (10), einer negativen Elektrode (20) und einer zwischen der positiven Elektrode (10) und der negativen Elektrode (20) angeordneten Festelektrolytlage (30),
wobei die Festelektrolytlage (30) ein poröses Substrat (31) und einen Festelektrolyten (32a, 32b) enthält, wobei der Festelektrolyt (32a, 32b) in Poren des porösen Substrats (31) beherbergt ist, und beide Oberflächen des porösen Substrats (31) mit dem Festelektrolyten (32a, 32b) bedeckt sind,
**dadurch gekennzeichnet, dass**
in der Festelektrolytlage (30) das poröse Substrat (31) in einer Dickenrichtung der Festelektrolytlage (30) zur positiven Elektrode (10) hin versetzt angeordnet ist, und
die Festelektrolytlage (30) eine Dicke von 50 µm oder weniger aufweist.

2. Festkörperbatterie (1) gemäß Anspruch 1, wobei an der Negative-Elektrode-Seite der Festelektrolytlage (30) ein Abstand zwischen einer Oberfläche des porösen Substrats (31) und dem in den negativen Elektrode (20) enthaltenen Negative-Elektrode-Aktivmaterial in der Dickenrichtung des Stapel-Hauptteils (100) 3 µm oder mehr beträgt.

3. Festkörperbatterie (1) gemäß Anspruch 1 oder 2, wobei die Dicke des porösen Substrats (31) im Bereich zwischen 30% und 85% der Dicke der Festelektrolytlage (30) liegt.

4. Festkörperbatterie (1) gemäß Anspruch 1 oder 2, wobei die Festelektrolytlage (30) eine Dicke von 5 µm oder mehr aufweist.

5. Festkörperbatterie (1) gemäß Anspruch 1, wobei das poröse Substrat (31) durch faserige Gegenstände dargestellt ist.

6. Festkörperbatterie (1) gemäß Anspruch 5, wobei die faserigen Gegenstände aus Cellulose, modifizierter Cellulose, Polyolefin, Polyester, Polyarylat, Aramid, Polyamid-Imid, Polyimid, Glas, Alumina oder Silica gebildet sind.

7. Festkörperbatterie (1) gemäß Anspruch 1, 5 oder 6, wobei das poröse Substrat (31) ein Vliesstoff ist.

8. Festkörperbatterie (1) gemäß Anspruch 1, wobei die Festelektrolytlage (30) Festelektrolytpartikel als den Festelektrolyten (32a, 32b) enthält.

9. Festkörperbatterie (1) gemäß Anspruch 1, wobei die Festelektrolytpartikel eine durchschnittliche Partikelgröße von 0,3 bis 5 µm aufweisen.

10. Festkörperbatterie (1) gemäß Anspruch 8 oder 9, wobei die Festelektrolytlage (30) Sulfid-basierte Festelektrolytpartikel als die Festelektrolytpartikel enthält.

## Revendications

1. Batterie tout solide (1) comprenant :
un corps empilé (100) pourvu d'une électrode positive (10), d'une électrode négative (20) et d'une feuille d'électrolyte solide (30) interposée entre l'électrode positive (10) et l'électrode négative (20),
dans laquelle la feuille d'électrolyte solide (30) contient un substrat poreux (31) et un électrolyte solide (32a, 32b), l'électrolyte solide (32a, 32b) est retenu dans les pores du substrat poreux (31), et les deux surfaces du substrat poreux (31) sont recouvertes d'électrolyte solide (32a, 32b),
**caractérisée en ce que,** dans la feuille d'électrolyte solide (30), le substrat poreux (31) est situé sollicité vers l'électrode positive (10) dans une direction d'épaisseur de la feuille d'électrolyte solide (30), et
la feuille d'électrolyte solide (30) a une épaisseur égale ou inférieure à 50 µm.

2. Batterie tout solide (1) selon la revendication 1, dans laquelle, du côté de l'électrode négative de la feuille d'électrolyte solide (30), une distance entre une surface du substrat poreux (31) et un matériau actif d'électrode négative contenu dans l'électrode négative (20) dans le sens d'épaisseur du corps empilé (100) est de 3 µm ou plus.

3. Batterie tout solide (1) selon la revendication 1 ou 2,
dans laquelle l'épaisseur du substrat poreux (31) est comprise entre 30 % et 85 % de l'épaisseur de la feuille d'électrolyte solide (30).

4. Batterie tout solide (1) selon la revendication 1 ou 2,
dans laquelle la feuille d'électrolyte solide (30) a une épaisseur égale ou supérieure à 5 µm.

5. Batterie tout solide (1) selon la revendication 1,
dans laquelle le substrat poreux (31) est constitué d'articles fibreux.

6. Batterie tout solide (1) selon la revendication 5,
dans laquelle les articles fibreux sont constitués de cellulose, de cellulose modifiée, de polyoléfine, de polyester, de polyarylate, d'aramide, de polyamide-imide, de polyimide, de verre, d'alumine ou de silice.

7. Batterie tout solide (1) selon la revendication 1, 5 ou 6,
dans laquelle le substrat poreux (31) est un tissu non tissé.

8. Batterie tout solide (1) selon la revendication 1,
dans laquelle la feuille d'électrolyte solide (30) contient des particules d'électrolyte solide comme l'électrolyte solide (32a, 32b).

9. Batterie tout solide (1) selon la revendication 8,
dans laquelle les particules d'électrolyte solide ont une taille moyenne de particules de 0,3 à 5 µm.

10. Batterie tout solide (1) selon la revendication 8 ou 9,
dans laquelle la feuille d'électrolyte solide (30) contient des particules d'électrolyte solide à base de sulfure en tant que particules d'électrolyte solide.
